# EUROPEAN PATENT SPECIFICATION

(11) **EP 3 267 352 B1**
(45) Date of publication and mention of the grant of the patent: **24.04.2019**
(21) Application number: 17177159.5
(22) Date of filing: 21.06.2017
(51) Int. Cl.: G06F 21/62

(54) **SECURE OPERATION APPARATUSES AND METHODS THEREFOR**
SICHERHEITSBETRIEBSVORRICHTUNGEN UND VERFAHREN DAFÜR
APPAREILS DE FONCTIONNEMENT SÉCURISÉ ET PROCÉDÉS ASSOCIÉS

(30) Priority: 05.07.2016 US 201615202060
(43) Date of publication of application: 10.01.2018
(73) Proprietor: NXP B.V., 5656 AG Eindhoven (NL)
(72) Inventor: WARNEZ, Dimitri, 5656 AG Eindhoven (NL); GOURAUD, Thierry Jean-Luc, 5656 AG Eindhoven (NL)
(74) Representative: Krott, Michel

(56) References cited:
- WO-A1-2013/188830
- US-A1- 2015 074 745
- US-A1- 2015 074 764
- US-A1- 2016 154 967

## Description

### OVERVIEW

Aspects of various embodiments are directed to circuits providing secure operations within a device, such as may be implemented for operating functions within handheld devices.

Certain applications require security, including those relating to financial transactions, or other applications that store and use sensitive data, whether the data is financial, personal, or otherwise. Various devices use a "secure element" (SE) within the device *(e.g.,* smart phone) to securely store sensitive data *(e.g.,* financial account numbers) and applications.

While circuitry that performs secure operations, such as SEs, can be useful their implementation can be challenging. For instance, operability of SEs and other secure circuits can be somewhat limited. Accordingly, the functionality of applications that use data pertaining to the secure circuitry can be limited. Further, maintaining security can be challenging where high-level access is provided.

These and other matters have presented challenges to the manufacture and implementation of such devices, for a variety of applications.

### SUMMARY

Various example embodiments are directed to issues such as those addressed above and/or others which may become apparent from the following disclosure concerning the execution of certain operations securely, such as those involving operations initiated within a relatively unsecure environment. In certain example embodiments, aspects of the present disclosure involve utilizing a secure area of a main processor as a trusted execution environment (TEE) to interface between a rich operating system (rich OS) and a secure element (SE). In various implementations, the TEE verifies commands provided by the rich OS and communicates to the SE for authorizing the SE to carry out commands received directly from the rich OS, with the SE returning secure data to the rich OS based on the commands. In other implementations, the TEE passes information directly to the SE based on commands received from the rich OS, and returns secure data from the SE to the rich OS.

In another embodiment, an apparatus involves a first circuit (e.g., having a rich operating system) that initiates secure operations by interfacing with a user, and providing operation trigger data *(e.g.,* a script and/or an identifier of the script) that is signed cryptographically and secured from alteration by the first circuit, based on the interfacing. A second circuit *(e.g.,* a secure element) securely hosts applications by storing data secured from access by the first circuit, and executing secure operations separately from operations executed by the first circuit, based on one or more commands, such as a script, provided by the first circuit. Validation circuitry (e.g., a trusted execution environment) that is connected to the first and second circuits validates and controls accesses to the second circuit by storing validation instructions protected from access by the first circuit, verifying a characteristic of the operation trigger data by executing the stored validation instructions with the operation trigger data, and communicating information, based on the verifying, to the second circuit. The second circuit is responsive to the communicated information by initiating execution of the secure operations.

In various embodiments, commands are provided directly from the first circuit to the second circuit as follows. The validation circuitry verifies a characteristic of the operation trigger data, and communicates an authorization instruction to the second circuit. The second circuit executes the at least one command, as received directly from the first circuit, in response to the authorization instruction. In this regard, the validation circuitry facilitates execution of operations on the second (e.g., secure element) circuit as received from what may be considered an untrusted environment (e.g., an application running on a rich operating system).

In other embodiments, commands from the first circuit are processed via the validation circuitry for ensuing execution of secure operations on the second circuity. For instance, the validation circuitry may execute validation instructions in response to the operation trigger data, and in response to verifying a characteristic of the operation trigger data, communicate an access request to the second circuit. The validation circuitry may also pass commands from the first circuit to the second circuit, based on the verification. In this context, the second circuit may operate based on the received information from the validation circuitry, which in effect may filter those instructions as coming from a relatively untrusted environment (*e*.*g*., from a rich operating system as noted above).

Various embodiments are directed to methods, such as those which may be implemented using one or more circuit components as noted herein. In some embodiments, a method is carried out as follows. Secure operations are initiated in a first circuit by interfacing with a user and, based on the interfacing, providing operation trigger data that is signed cryptographically and secured from alteration by the first circuit. In a second circuit, applications are securely hosted by storing data secured from access by the first circuit, and executing secure operations separately from operations executed by the first circuit, based on at least one command (script) provided by the first circuit. In validation circuitry connected to the first circuit and to the second circuit, validating and controlling accesses to the second circuit are carried out by storing validation instructions protected from access by the first circuit, verifying a characteristic of the operation trigger data by executing the stored validation instructions with the operation trigger data, and communicating information to the second circuit based on the verifying. The second circuit is responsive to the communicated information by initiating the executing of the secure operations.

In various implementations, the first circuit, second circuit and validation circuitry are utilized to provide secure operations by carrying out commands in the second circuit as received directly from the first circuit, utilizing the validation circuitry to filter commands sent from the first circuit, or a combination thereof. In the former, the validation circuitry is used to communicate authorization data to the second circuit, which processes the command received directly from the first circuit, based on the authorization data. For the latter filter approach, the validation circuitry communicates an instruction including and/or based upon the at least one command to the second circuit, which processes the instruction and returns a result thereof to the validation circuitry. The validation circuitry then passes the returned result to the first circuit and/or elsewhere, to facilitate access.

The above discussion/summary is not intended to describe each embodiment or every implementation of the present disclosure. The figures and detailed description that follow also exemplify various embodiments.

### BRIEF DESCRIPTION OF FIGURES

Various example embodiments may be more completely understood in consideration of the following detailed description in connection with the accompanying drawings, in which:
FIG. 1 shows an apparatus, in accordance with the present disclosure;
FIG. 2 shows an apparatus with an interface and display, in accordance with the present disclosure; and
FIG. 3 shows an apparatus, as may be implemented in accordance with the present disclosure.

While various embodiments discussed herein are amenable to modifications and alternative forms, aspects thereof have been shown by way of example in the drawings and will be described in detail. It should be understood, however, that the intention is not to limit the disclosure to the particular embodiments described. On the contrary, the intention is to cover all modifications, equivalents, and alternatives falling within the scope of the disclosure including aspects defined in the claims. In addition, the term "example" as used throughout this application is only by way of illustration, and not limitation.

### DETAILED DESCRIPTION

Aspects of the present disclosure are believed to be applicable to a variety of different types of apparatuses, systems and methods involving secure execution and/or data protection. In certain implementations, aspects of the present disclosure have been shown to be beneficial when used in the context of mobile devices, such as those that may be used for carrying out secure operations such as payment operations. More specific embodiments involve an apparatus and/or method with a main circuit (e.g., processor) that operates using a rich (highly-functional) operating system (OS), a trusted execution environment (TEE) circuit that carries out operations with a higher level of security than those carried out by the main circuit, and a secure element (SE) having a processor that is separate from that of the main circuit. Relatively unsecure "rich" features of the rich OS are used to carry out secure functions within the SE, by communicating encrypted instructions (e.g., commands and/or scripts), with the TEE providing authorization/access to the instructions and therein controlling interaction between the SE and rich OS. Such an approach may be carried out in a mobile phone using a rich OS such as the Android OS by Google, with the TEE providing security against attacks and used to control execution of scripts/instructions on the SE. While not necessarily so limited, various aspects may be appreciated through the following discussion of non-limiting examples which use exemplary contexts.

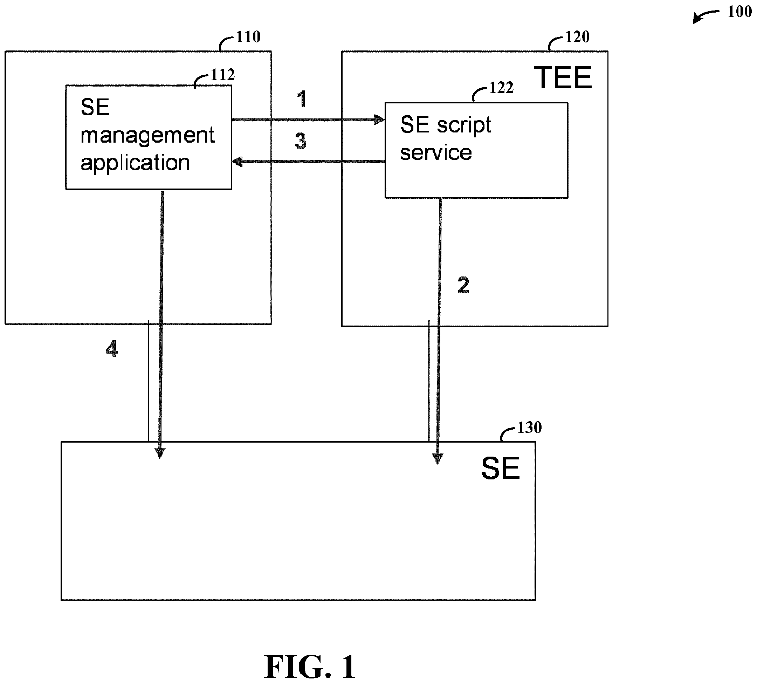

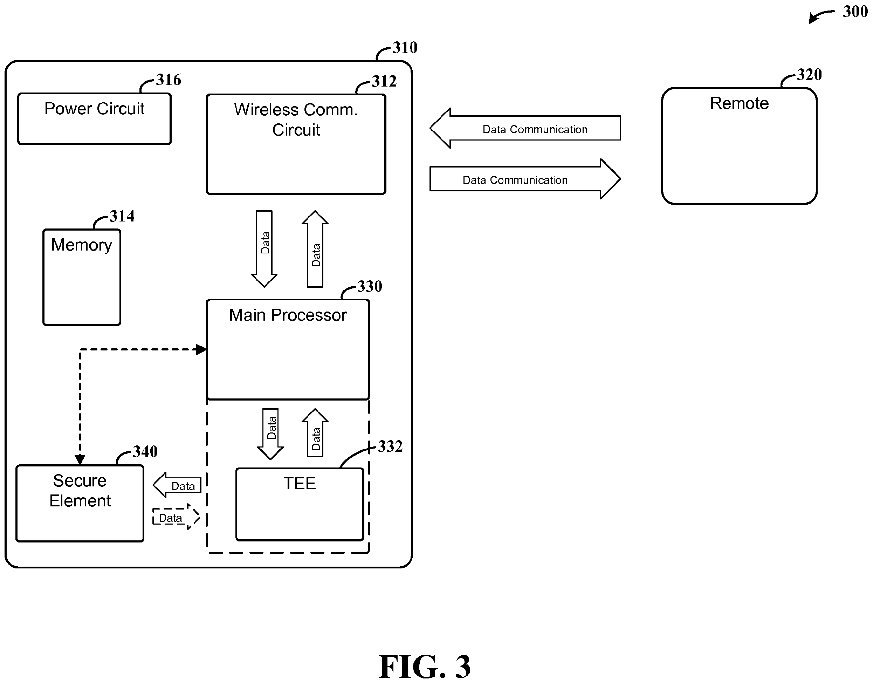

Accordingly, in the following description various details are set forth to describe examples presented herein. It should be apparent to one skilled in the art, however, that one or more other examples and/or variations of these examples may be practiced without all the specific details given below. In other instances, well known features have not been described in detail so as not to obscure the description of the examples herein. For ease of illustration, the same reference numerals may be used in different diagrams to refer to the same elements or additional instances of the same element. Also, although aspects and features may in some cases be described in individual figures, it will be appreciated that features from one figure or embodiment can be combined with features of another figure or embodiment even though the combination is not explicitly shown or explicitly described as a combination. Similarly, components shown in each figure may be implemented in separate embodiments. For instance, aspects of the trusted execution environment circuit in Figure 1 may be implemented as a separate embodiment, which would operate to interact with a main/rich OS system and a secure element. Similarly, the components shown in Figure 3 may be implemented from a system perspective, or separately with the remote device being independent.

The following definitions characterize aspects as noted. A secure element (or SE) refers to circuit that carries out secure operations involving secure data, and includes at least a separate processor and stored code that, when executed by the second processor, causes the second processor to carry out secure operations. Such an SE can be implemented as a tamper-resistant integrated circuit chip having a processor that is separate from a main processor operating within a common device, such as a mobile telephone in which the main processor carries out a majority of the functions for the mobile telephone. A rich operating system (or rich OS) refers to stored code that, when executed by a processor such as a main processor of a mobile telephone as noted above, carries out operations such as those specified for running an application. A trusted execution environment (TEE) refers to a processor and code that is protected from access by other applications, and executes the code in isolation from the other applications. For instance, the TEE may protect the code from access by applications executed by the same processor utilized by the TEE (e.g., with the TEE utilizing a secure area of the main processor), or by utilizing a separate processor. A script refers to an instruction or sequence of instructions that may be executed by a processor, and includes at least one command. A command also refers to an instruction that may be executed by a processor, such as a directive that a processor or computer interprets/executes. A one-chip secure microcontroller includes at least a processor and memory that stores code executable by the processor, and may be implanted separately from a main processor chip within a common device. In this context a one-chip secure microcontroller may be an SE mounted on a common substrate with a main processor, or stacked therewith, and connected by other external connectors. The term integrated chip set refers to a collection of integrated circuits that together form an electronic component such as a one-chip microcontroller.

In accordance with another embodiment, an apparatus includes a main rich OS processor that is operable to interface with a user and to initiate secure operations by providing a cryptographically signed operation trigger that is secured from alteration. The apparatus also includes an SE circuit having a processing circuit that operates independently from the main circuit and a TEE circuit. The TEE and SE circuits may be implemented in a variety of manners. For instance, such a TEE circuit may be implemented as a separate processor and/or a secure area of the main processor circuit (*e*.*g*., of a smart phone or connected device such as a tablet, set-top box and television) that protects code and data loaded within in respect to confidentiality and integrity. In this context, the TEE circuit may store code securely protected from access by the main circuit, and respond to the operation trigger by executing the stored code to verify a characteristic of the operation trigger, and by communicating with the secure element circuit to facilitate execution of the operations in response to the instructions. The SE circuit can store secure data and provide access to the secure data by executing operations in response to instructions (*e*.*g*., a command and/or a script) provided by the main circuit. Further in these contexts, the SE circuit can be implemented as a tamper-resistant platform, such as a one-chip secure microcontroller or integrated chip set, that securely hosts applications and their confidential and cryptographic data. For instance, cryptographic keys may be managed in accordance with the rules and security requirements set forth by a set of well-identified trusted authorities.

Communicating with the SE circuit to facilitate execution of the operations can be carried out in various manners. In some implementations, the TEE circuit verifies the instructions provided by the main circuit and, when verified, either passes the instructions to the SE circuit or executes the instructions for accessing the SE circuit. In other implementations, the TEE circuit sends an authorization to the SE in response to authorizing the instructions (*e*.*g*., verifying a key and/or user-provided security data), after which the main circuit sends the instructions directly to the SE circuit which executes the instructions based on the TEE circuit's authorization. In these and other contexts, the trigger can be an identifier or a representation of the identifier, which can be part of a script, an instruction itself, or an indication of what the instruction(s) is/are for (*e*.*g*., locking the SE, or providing secure data for access).

In a more specific example embodiment, an apparatus involves a first host circuit that hosts a rich operating system (*e*.*g*., on a mobile phone), a second secure host circuit (*e*.*g*., a secure element) and validation circuitry (*e*.*g*., a TEE) that is connected to the first and second circuits. For instance, the first circuit may be a chip having a processor and stored code including downloaded application code that, when executed by the first processor, causes the first processor to carry out application operations. This may include, for example, a mobile apparatus processor that hosts a rich OS such as iOS 9 available from Apple, Inc. of Cupertino, California, or the Android 6.0 OS available from Google, Inc., of Mountain View, California. The second circuit may be implemented as a tamper-resistant integrated circuit chip (*e*.*g*., secure element) having a separate processor and stored code that, when executed by the second processor, causes the second processor to carry out the secure operations. In various implementations, the tamper-resistant integrated circuit chip stores the code in an unlocked state and, after storing the code, enter a locked state in which the storage of additional code on the tamper-resistant integrated circuit chip is prevented. Such a lock operation may, for example, be carried out using the rich OS, TEE and approaches herein.

In various embodiments, the first (host) circuit initiates secure operations by interfacing with a user and providing operation trigger data that is signed cryptographically and secured from alteration thereby, based on the interfacing (*e*.*g*., in response to a user input, such as an input generated by an application). This may involve, for example, providing a signed script and/or identifier in response to a user-application running on a rich operating system, where the application is prevented from modifying the script. The second circuit securely hosts applications by storing data secured from access by the first circuit, and executing secure operations separately from operations executed by the first circuit, based on one or more commands provided by the first circuit. This may involve, for example, a system-on-chip secure element having a processor and instructions stored thereon, which are executed separately from operations of a rich operating system as noted above. The validation circuitry validates and controls access to the second circuit by storing validation instructions protected from access by the first circuit, and verifying a characteristic of the operation trigger data by executing the stored validation instructions with the operation trigger data. For instance, the validation circuitry may obtain user input security data (via the first circuit or otherwise) and verify that the user input security data matches secure data stored by the validation circuitry. Such secure data may be stored by the validation circuitry in a manner that is inaccessible to applications executed separately from the validation circuitry, such as applications hosted on a rich OS. Information (e.g., a script as above, or the result of executing the script) and communicating information, based on the verifying, to the second circuit. The second circuit is responsive to the communicated information by initiating execution of the secure operations.

In some embodiments the second circuit executes instructions received directly from the main circuit, utilizing the validation circuitry to verify the instructions to provide authorization to the second circuit. This approach may facilitate the execution of scripts on a secure element, where those scripts are provided by a rich operating system as may be implemented as a generally untrusted environment. In some embodiments, the validation circuitry verifies a characteristic of the operation trigger data and communicates an authorization instruction to the second circuit. In some implementations, the validation circuitry also notifies the first circuit that the characteristic of the operation trigger data is verified, and the first circuit then transmits the command(s) to the second circuit. The instruction may be data that identifies a script as being acceptable to execute. The second circuit executes the command(s), as received directly from the first circuit, in response to the authorization instruction. In some implementations, the second circuit executes the command(s) in response to verifying that the command(s) includes an identification characterized in the authorization instruction. In other implementations, the second circuit verifies a signature included with the command(s), and executes the instructions in response to verifying the signature.

In other embodiments, commands from the first circuit are processed via the validation circuitry for ensuing execution of secure operations on the second circuit. For instance, the validation circuitry may execute validation instructions in response to the operation trigger data, and in response to verifying a characteristic of the operation trigger data, communicate an access request to the second circuit. The operation trigger data may, for example, include the command(s) and be cryptographically protected, in which case the circuitry verifies that a signature of the command(s) matches a signature that is stored by the validation circuitry. The validation circuitry may also pass commands from the first circuit to the second circuit, based on the verification. In this context, the second circuit may operate based on the received information from the validation circuitry, which in effect may filter those instructions as coming from a relatively untrusted environment (e.g., from a rich operating system as noted above).

The validation circuitry and second circuit may interoperate for processing the commands via the validation circuitry in a variety of manners. The validation circuitry communicates the access request to the second circuit by processing the command(s) provided by the first circuit by executing the command(s) and/or passing the command(s) to the second circuit. The second circuit executes the secure operations in response to command(s) provided by the first circuit and/or instructions generated by the validation circuit executing the command(s), by returning information from the second circuit to the validation circuitry. The validation circuitry may then to provide the returned information, such as a result of executing commands, to the first circuit.

Various methods are carried out using approaches and circuitry as characterized herein, for various embodiments. In some embodiments, an apparatus having first and second circuits, and a validation circuit as noted herein is utilized in which the second circuit is authorized to carry out commands received directly from the first circuit by communicating authorization data from the validation circuit to the second circuit, where the at least one command (as received directly from the first circuit) is processed based on the authorization data. In other embodiments, communication of the command(s) between the first and second circuits are facilitated via the validation circuitry, in which the command(s) is communicated to the second circuit and/or the validation circuitry executes the command(s) to generate an output to the second circuit. The second circuit then returns a result, of executing the command(s) and/or responding to the output.

Turning now to the figures, Figure 1 shows an apparatus 100 with respective circuitry including (first) circuit 110, (second) circuit 120, and (third) circuit 130 that operate to provide secure operations. Circuit 110 initiates secure operations by providing an operation trigger that is signed cryptographically and secured from alteration (e.g., circuit 110 can provide the trigger, but is unable to alter it). Circuit 130 operates independently from circuit 110, stores secure data and provides access to the secure data by executing operations in response to instructions provided by circuit 110. Circuit 120 stores code protected from access by circuit 110, and operates in response to the operation trigger by executing the stored code to verify a characteristic of the operation trigger. If the operation trigger is verified, circuit 120 communicates with the secure element circuit to facilitate execution of the aforementioned operations (e.g., such as by communicating secure data).

The circuit 110 is shown including a management application block 112, and circuit 120 is shown implemented with a script service block 122, each of which can be implemented for communications and interactions with circuit 130 implemented as an SE. In some embodiments, these components are implemented as follows. The management application block 112 passes an encrypted instruction or instructions, such as an encrypted script, to the script service block 122 (arrow 1) to initiate an operation (e.g., with or as part of an operation trigger). The script service block 122 parses the encrypted instruction or instructions for validation, such as by obtaining a personal identification number (PIN) from a user of the apparatus. If the validation is successful, the script service block notifies circuit 130 (arrow 2) that a specific set of information (*e*.*g*., script) that has been validated can be accepted, and also notifies circuit 110 and/or the management application block 112 of the validation (arrow 3). The management application block 112 executes the instructions or otherwise communicates directly with circuit 130 via the instructions (arrow 4), with the circuit 130 operating on the instructions based upon the validation notification from the script service block 122. With this approach, circuit 120 controls and authorizes operations of circuit 130 upon information provided by circuit 110, providing relatively high security functionality (in circuit 120) along with relatively high functionality (in circuit 110).

In a particular embodiment, the circuit 110 operates in response to a user input by triggering the management application block 112 to execute a specific operation with a specific execution script, such as locking an SE. The script is cryptographically protected (authenticity, integrity) with a signature and contains a certain identification (ID) value corresponding to the specific operation, and information about the operation is passed to the script service block 122. The script service block 122 operates to obtain a secure PIN input from the user, and checks that pin against a PIN securely stored by the script service block 122. If the PIN check is successful, the circuit 120 sends a notification to circuit 130 (implemented as a SE) that a script with the certain ID value can be accepted, and also notifies the management application block 112 that the needed condition was met. The management application block 112 then executes the specific operation with the ID value. If the signature and integrity are successfully verified, the circuit 130 accepts this script based on the notification from circuit 120.

In another particular embodiment in which the circuit 120 passes information between circuits 110 and 130 (*e*.*g*., the TEE executes script and passes results from the SE to the rich OS), the circuits operate as follows. Circuit 110 operates as noted above, in response to a user input by triggering script management application block 112 to perform a certain operation. The management application block 112 passes a script, which contains a certain execution condition identifier, to script service block 122. The script service block 122 verifies the integrity and signature of the script, and performs a needed action to meet the execution condition (*e*.*g*., a secure PIN check). If the needed action (*e*.*g*., PIN check) is successful, the script service block 122 executes the script and/or otherwise passes the script to circuit 130 (SE). The script service block 122 returns status information to the script management application 112 as needed, and which may involve communicating information received from circuit 130.

In some embodiments, the circuit 110, circuit 120, and circuit 130 are implemented in a portable device such as a mobile phone. The circuit 110 includes a main processing circuit of the device and runs a rich operating system for general functions, such as making telephone calls, making network connections, executing various applications, and taking photos. The circuit 120 is TEE circuit that includes a secure area of the main processing circuit, which carries out functions that are protected from access by other functions or applications running on the main processing circuit. In this context the TEE circuit provides enhanced/protected operation relative to operation of the rich operating system. The circuit 130 is a secure element (SE) circuit including a chip that is separated from the circuit 110, and that operates independently in a manner that prevents access by the circuit 110. The SE circuit stores secure data, such as payment or other data, and presents the secure data based on internal operations carried out in response to instructions/scripts provided thereto, along with related security information. In this context, the nomenclature "TEE" and "SE" used in Figure 1 is exemplary.

The respective circuit components shown in Figure 1 may be connected and implemented in a variety of manners. In some embodiments, one or more of circuits 110, 120 and 130 are implemented separately, such as with circuit 130 being a separate secure element chip. In other embodiments, one or more of circuits 110, 120 and 130 may be implemented together, such as with circuit 120 being implemented as a part of circuit 110 (*e*.*g*., a TEE implemented as part of a main OS).

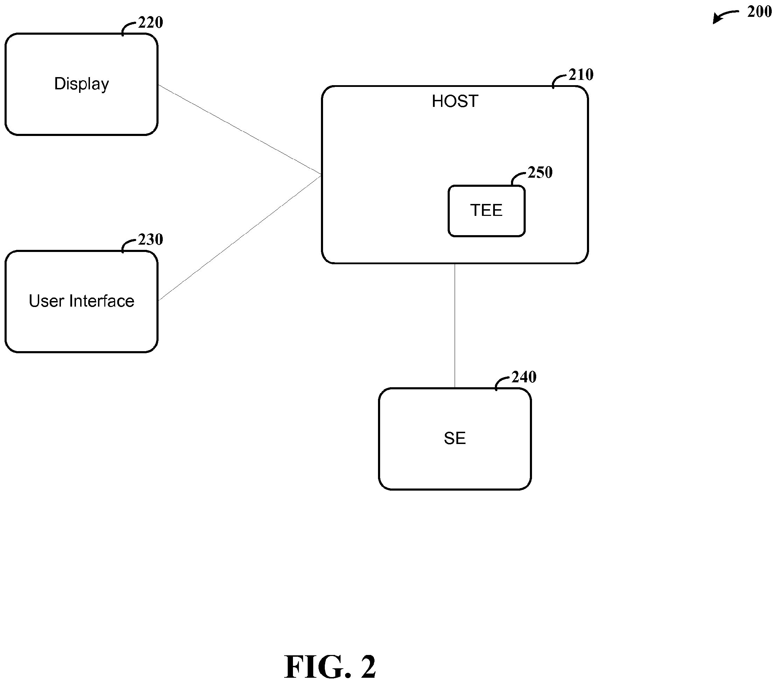

Figure 2 shows an apparatus 200, as may be implemented in accordance with one or more embodiments. The apparatus 200 includes a host 210, interface 220, display 230 and secure element (SE) 240. The host 210 may include a microprocessor and operating system that provides functionality including interaction with users via the display 220 and user interface 230, such as in a mobile telephone, laptop or other electronic device. The user interface 230 may be integrated with the display 220 as part of a touch screen interface. The host 210 includes a TEE 250, which is a secure area providing a higher level of security relative to other areas of the host and is configured to control interaction with the SE in accordance with one or more embodiments herein. In this context, the host may run various applications that can be executed on a mobile device, such as those relating to telephone calls, messaging, email, GPS, internet operation and more, while the TEE stores code and/or other data that is kept separate from the rest of the host and to which access by the applications is prevented. The SE carries out secure operations on a separate processor, with the TEE 260 controlling interaction between the host and SE in a manner as noted herein (*e*.*g*., as discussed with Figure 1 or otherwise above).

Figure 3 shows an apparatus 300, as may be implemented in accordance with one or more embodiments. The apparatus 300 includes a device 310, such as a tablet, wearable device, computer or mobile phone that interfaces with a remote device 320 for performing secure communications. The apparatus may include both device 310 and the remote device 320 in a system context, or may be directed to device 310 and its interoperability.

The device 310 includes a wireless communication circuit 312 that operates to communicate with the remote device 320, memory 314 and power circuit 316 that may provide power to one or more components in the device 310. Also included are a main processor 330 and TEE 332, which may be implemented as part of the main processor (shown by dashed lines), and a secure element (SE) 340.

The main processor 330, TEE 332 and SE 340 operate in accordance with one or more embodiments herein, with the TEE controlling interaction between the main processor and SE. The TEE 332 verifies instructions (*e*.*g*., scripts) provided by the main processor 330 and, when verified, facilitates operation of the SE circuit relative to the main processor 330. In some implementations, the TEE 332 either passes the instructions to the SE 340 or executes the instructions for accessing the SE. In other implementations, the TEE 332 sends an authorization to the SE 340 in response to authorizing the instructions (*e*.*g*., verifying a key and/or user-provided security data), after which the main processor 330 sends the instructions directly to the SE. The SE then executes the instructions based on TEE 332's authorization.

Terms to exemplify orientation, such as upper/lower, left/right, top/bottom and above/below, may be used herein to refer to relative positions of elements as shown in the figures. It should be understood that the terminology is used for notational convenience only and that in actual use the disclosed structures may be oriented different from the orientation shown in the figures. Thus, the terms should not be construed in a limiting manner.

The skilled artisan would recognize that various terminology as used in the Specification (including claims) connote a plain meaning in the art unless otherwise indicated. As examples, the specification describes and/or illustrates aspects useful for implementing the claimed disclosure by way of various circuits or circuitry which may be illustrated as or using terms such as blocks, modules, device, system, unit, controller, clamp and/or other circuit-type depictions (e.g., one or more of reference numerals 110, 120 and 130 of Figure 1 may depict a block/module in this context). Such circuits or circuitry are used together with other elements to exemplify how certain embodiments may be carried out in the form or structures, steps, functions, operations, activities, etc. As another example, where the Specification may make reference to a "first [type of structure]", a "second [type of structure]", etc., where the [type of structure] might be replaced with terms such as ["circuit", "circuitry" and others], the adjectives "first" and "second" are not used to connote any description of the structure or to provide any substantive meaning; rather, such adjectives are merely used for English-language antecedence to differentiate one such similarly-named structure from another similarly-named structure (*e*.*g*., "first circuit configured to initiate ..." is interpreted as "circuit configured to initiate ...").

Based upon the above discussion and illustrations, those skilled in the art will readily recognize that various modifications and changes may be made to the various embodiments without strictly following the exemplary embodiments and applications illustrated and described herein. For example, methods as exemplified in the Figures may involve steps carried out in various orders, with one or more aspects of the embodiments herein retained, or may involve fewer or more steps. The respective trenches and layers as shown may be formed in different orders or with different arrangements to achieve a particular effect. As another example, different types of high voltage devices can be utilized with low voltage switches and related componentry that effects both clamping and capacitance enhancement. Such modifications do not depart from the scope of various aspects of the disclosure, including aspects set forth in the claims.

## Claims

1. An apparatus (100) comprising:
a first circuit (110) configured and arranged to initiate secure operations by:
interfacing with a user; and
based on the interfacing, providing operation trigger data that is signed cryptographically and secured from alteration by the first circuit (110);
a second circuit (120) including a secure element and configured and arranged to securely host applications by:
storing data secured from access by the first circuit (110), and
executing secure operations separately from operations executed by the first circuit (110), based on at least one command provided by the first circuit (110); and
validation circuitry (130) connected to the first circuit (110) and to the second circuit (120), the validation circuitry (130) being configured and arranged to validate and control accesses to the second circuit (120) by:
storing validation instructions protected from access by the first circuit (110),
verifying a characteristic of the operation trigger data by executing the stored validation instructions with the operation trigger data, and
based on the verifying, communicating information to the second circuit (120), the second circuit (120) being responsive to the communicated information by initiating the executing of the secure operations, wherein:
the first circuit (110) is configured and arranged to provide the at least one command directly to the second circuit (120),
the validation circuitry (130) is configured and arranged to execute the validation instructions in response to the operation trigger data, and in response to verifying a characteristic of the operation trigger data, communicate an authorization instruction to the second circuit (120), and
the second circuit (120) is configured and arranged to execute the at least one command, as received directly from the first circuit (110), in response to the authorization instruction, wherein the validation circuitry (130) is configured and arranged to notify the first circuit (110) that the characteristic of the operation trigger data is verified, and
the first circuit (110) is configured and arranged to transmit the at least one command to the second circuit (120) in response to the notification that the characteristic of the operation trigger data is verified.

2. The apparatus (100) of claim 1, wherein the second circuit (120) is configured and arranged to execute the at least one command in response to the authorization instruction by verifying that the at least one command includes an identification **characterized in** the authorization instruction.

3. The apparatus (100) of claim 1 or 2, wherein the validation circuitry (130) is configured and arranged to verify the characteristic of the operation trigger data by obtaining user input security data via the first circuit (110) and verifying that the user input security data matches secure data stored by the validation circuitry (130).

4. The apparatus (100) of any one of claims 1 to 3, wherein the second circuit (120) is configured and arranged to verify a signature included with the at least one command, and to execute the instructions in response to verifying the signature.

5. The apparatus (100) of any preceding claim, wherein:
the first circuit (110) is configured and arranged to provide the at least one command to the validation circuitry (130),
the validation circuitry (130) is configured and arranged to execute the validation instructions in response to the operation trigger data, and in response to verifying a characteristic of the operation trigger data, communicate an access request to the second circuit (120), and
the second circuit (120) is configured and arranged to execute the secure operations in response to the access request.

6. The apparatus of claim 5, wherein:
the validation circuitry (130) is configured and arranged to execute the at least one command provided by the first circuit (110), and to communicate the access request to the second circuit (120) in response to executing the at least one command, and
the second circuit (120) is configured and arranged to execute the secure operations in response to the at least one command provided by the first circuit (110), by returning information from the second circuit (120) to the validation circuitry (130) in response to the access request.

7. The apparatus of claim 5 or 6, wherein
the validation circuitry (130) is configured and arranged to communicate the access request by providing the at least one command to the second circuit (120), and
the second circuit (120) is configured and arranged to execute the operations in response to the at least one command.

8. The apparatus of any one of claims 5 to 7, wherein:
the second circuit (120) is configured and arranged to provide a result, generated by executing the secure operations, to the validation circuitry (130), and
the validation circuitry (130) is configured and arranged to provide the result received from the second circuit, to the first circuit (110).

9. The apparatus of any one of claims 5 to 8, wherein the validation circuitry (130) is configured and arranged to verify a condition specified in the at least one command by obtaining a user input and comparing the user input to data that is stored by the validation circuitry (130) and that is inaccessible to applications executed separately from the validation circuitry (130).

10. The apparatus of any one of claims 5 to 9, wherein the operation trigger data includes the at least one command and is cryptographically protected, and wherein the validation circuitry (130) is configured and arranged to verify the characteristic of the operation trigger data by verifying that a signature of the at least one command matches a signature that is stored by the validation circuitry (130).

11. The apparatus of any preceding claim, wherein the first circuit (110) is configured and arranged to initiate the secure operations in response to a user input.

12. The apparatus of any preceding claim, wherein
the first circuit (110) is a first chip having a first processor and stored code including downloaded application code that, when executed by the first processor, causes the first processor to carry out application operations, and
the second circuit (120) is a tamper-resistant integrated circuit chip having a second processor and stored code that, when executed by the second processor, cause the second processor to carry out the secure operations, and
the tamper-resistant integrated circuit chip is configured and arranged to store the code in an unlocked state and, after storing the code, enter a locked state in which the storage of additional code on the tamper-resistant integrated circuit chip is prevented.

13. A method comprising:
in a first circuit (110), initiating secure operations by:
interfacing with a user; and
based on the interfacing, providing operation trigger data that is signed cryptographically and secured from alteration by the first circuit (110);
in a second circuit (120) including a secure element, securely hosting applications by:
storing data secured from access by the first circuit (110), and
executing secure operations separately from operations executed by the first circuit (110), based on at least one command provided by the first circuit (110); and
in validation circuitry (130) connected to the first circuit (110) and to the second circuit (120), validating and controlling accesses to the second circuit (120) by:
storing validation instructions protected from access by the first circuit (110),
verifying a characteristic of the operation trigger data by executing the stored validation instructions with the operation trigger data, and
based on the verifying, communicating information to the second circuit (120), the second circuit (120) being responsive to the communicated information by initiating the executing of the secure operations, wherein
providing the at least one command from the first circuit (110) directly to the second circuit (120),
in the validation circuitry (130), executing the validation instructions in response to the operation trigger data,
in response to verifying a characteristic of the operation trigger data, communicating an authorization instruction from the validation circuitry (130) to the second circuit (120), and
in the second circuit (120), executing the at least one command, as received directly from the first circuit (110), in response to the authorization instruction, wherein
notifying, by the validation circuitry (130), the first circuit (110) that the characteristic of the operation trigger data is verified, and
transmitting the at least one command from the first circuit (110) to the second circuit (120) in response to the notification that the characteristic of the operation trigger data is verified.

## Patentansprüche

1. Gerät (100) mit:
einer ersten Schaltung (110), die dazu konfiguriert und eingerichtet ist, sichere Betriebe zu initiieren, und zwar durch:
eine Kopplung mit einem Benutzer; und
einer Bereitstellung von Betriebstriggerdaten, die verschlüsselt signiert und vor einer Änderung durch die erste Schaltung (110) gesichert sind;
einer zweiten Schaltung (120), die ein Sicherheitselement aufweist und dazu konfiguriert und eingerichtet ist, Anwendungen sicher durchzuführen, und zwar durch:
Speichern von Daten, die vor einem Zugriff durch die erste Schaltung (110) gesichert sind, und
Ausführen von sicheren Betrieben getrennt von Betrieben, die durch die erste Schaltung (110) ausgeführt werden, und zwar zumindest auf der Grundlage von einem Befehl, der durch die erste Schaltung (110) bereitgestellt wird; und
einer Validationsschaltung (130), die mit der ersten Schaltung (110) und der zweiten Schaltung (120) verbunden ist, wobei die Validationsschaltung (130) dazu konfiguriert und eingerichtet ist, Zugriffe auf die zweite Schaltung (120) zu validieren und zu steuern, und zwar durch:
Speichern von Validationsbefehlen, die vor einem Zugriff durch die erste Schaltung (110) geschützt sind,
Verifizieren einer Charakteristik der Betriebstriggerdaten durch Ausführen der gespeicherten Validationsbefehle mit den Betriebstriggerdaten, und
Kommunizieren von Informationen mit der zweiten Schaltung (120) auf der Grundlage der Verifikation, wobei die zweite Schaltung (120) auf die kommunizierten Informationen reagiert, indem die Ausführung der sicheren Betriebe initiiert wird, wobei:
die erste Schaltung (110) dazu konfiguriert und eingerichtet ist, den zumindest einen Befehl direkt für die zweite Schaltung (120) bereitzustellen,
die Validationsschaltung (130) dazu konfiguriert und eingerichtet ist, die Validationsbefehle als Reaktion auf die Betriebstriggerdaten auszuführen, und als Reaktion auf die Verifikation einer Charakteristik der Betriebstriggerdaten einen Autorisationsbefehl zu der zweiten Schaltung (120) zu kommunizieren, und
die zweite Schaltung (120) dazu konfiguriert und eingerichtet ist, den zumindest einen Befehl, wenn er direkt von der ersten Schaltung (110) aufgenommen wird, als Reaktion auf den Autorisationsbefehl auszuführen, wobei die Validationsschaltung (130) dazu konfiguriert und eingerichtet ist, der ersten Schaltung (110) mitzuteilen, dass die Charakteristik der Betriebstriggerdaten verifiziert ist, und
die erste Schaltung (110) dazu konfiguriert und eingerichtet ist, den zumindest einen Befehl zu der zweiten Schaltung (120) als Reaktion auf die Mitteilung zu senden, dass die Charakteristik der Betriebstriggerdaten verifiziert ist.

2. Gerät (100) gemäß Anspruch 1, wobei die zweite Schaltung (120) dazu konfiguriert und eingerichtet ist, den zumindest einen Befehl als Reaktion auf den Autorisationsbefehl auszuführen, indem verifiziert wird, dass der zumindest eine Befehl eine Identifikation aufweist, die in dem Autorisationsbefehl gekennzeichnet ist.

3. Gerät (100) gemäß Anspruch 1 oder 2, wobei die Validationsschaltung (130) dazu konfiguriert und eingerichtet ist, die Charakteristik der Betriebstriggerdaten zu verifizieren, indem Benutzereingabesicherheitsdaten über die erste Schaltung (110) erhalten werden und verifiziert wird, dass die Benutzereingabesicherheitsdaten mit Sicherheitsdaten übereinstimmen, die durch die Validationsschaltung (130) gespeichert sind.

4. Gerät (100) gemäß einem der Ansprüche 1 bis 3, wobei die zweite Schaltung (120) dazu konfiguriert und eingerichtet ist, eine Signatur zu verifizieren, die bei dem zumindest einen Befehl enthalten ist, und die Befehle als Reaktion auf eine Verifikation der Signatur auszuführen.

5. Gerät (100) gemäß einem der vorherigen Ansprüche, wobei:
die erste Schaltung (110) dazu konfiguriert und eingerichtet ist, den zumindest einen Befehl für die Validationsschaltung (130) bereitzustellen,
die Validationsschaltung (130) dazu konfiguriert und eingerichtet ist, die Validationsbefehle als Reaktion auf die Betriebstriggerdaten auszuführen, und als Reaktion auf eine Verifikation einer Charakteristik der Betriebstriggerdaten eine Zugriffsanfrage zu der zweiten Schaltung (120) zu kommunizieren, und
die zweite Schaltung (120) dazu konfiguriert und eingerichtet ist, die sicheren Betriebe als Reaktion auf die Zugriffsanfrage auszuführen.

6. Gerät gemäß Anspruch 5, wobei:
die Validationsschaltung (130) dazu konfiguriert und eingerichtet ist, den zumindest einen Befehl auszuführen, der durch die erste Schaltung (110) bereitgestellt wird, und die Zugriffsanfrage zu der zweiten Schaltung (120) als Reaktion auf eine Ausführung des zumindest einen Befehls zu kommunizieren, und
die zweite Schaltung (120) dazu konfiguriert und eingerichtet ist, die sicheren Betriebe als Reaktion auf den zumindest einen Befehl auszuführen, der durch die erste Schaltung (110) bereitgestellt wird, indem Informationen von der zweiten Schaltung (120) zu der Validationsschaltung (130) als Reaktion auf die Zugriffsanfrage zurückgeführt werden.

7. Gerät gemäß Anspruch 5 oder 6, wobei:
die Validationsschaltung (130) dazu konfiguriert und eingerichtet ist, die Zugriffsanfrage durch Bereitstellen des zumindest einen Befehls zu der zweiten Schaltung (120) zu kommunizieren, und
die zweite Schaltung (120) dazu konfiguriert und eingerichtet ist, die Betriebe als Reaktion auf den zumindest einen Befehl auszuführen.

8. Gerät gemäß einem der Ansprüche 5 bis 7, wobei:
die zweite Schaltung (120) dazu konfiguriert und eingerichtet ist, ein Ergebnis, das durch Ausführen der sicheren Betriebe erzeugt wird, für die Validationsschaltung (130) bereitzustellen, und
die Validationsschaltung (130) dazu konfiguriert und eingerichtet ist, das von der zweiten Schaltung aufgenommene Ergebnis für die erste Schaltung (110) bereitzustellen.

9. Gerät gemäß einem der Ansprüche 5 bis 8, wobei die Validationsschaltung (130) dazu konfiguriert und eingerichtet ist, eine in dem zumindest einen Befehl spezifizierte Bedingung zu verifizieren, indem eine Benutzereingabe erhalten wird und die Benutzereingabe mit Daten verglichen wird, die durch die Validationsschaltung (130) gespeichert sind und auf die Anwendungen keinen Zugriff haben, die getrennt von der Validationsschaltung (130) ausgeführt werden.

10. Gerät gemäß einem der Ansprüche 5 bis 9, wobei die Betriebstriggerdaten den zumindest einen Befehl enthalten und verschlüsselt geschützt sind, und wobei die Validationsschaltung (130) dazu konfiguriert und eingerichtet ist, die Charakteristik der Betriebstriggerdaten zu verifizieren, indem verifiziert wird, dass eine Signatur des zumindest einen Befehls mit einer Signatur übereinstimmt, die durch die Validationsschaltung (130) gespeichert ist.

11. Gerät gemäß einem der vorherigen Ansprüche, wobei die erste Schaltung (110) dazu konfiguriert und eingerichtet ist, die sicheren Betriebe als Reaktion auf eine Benutzereingabe zu beginnen.

12. Gerät gemäß einem der vorherigen Ansprüche, wobei
die erste Schaltung (110) ein erster Chip ist, der einen ersten Prozessor und einen gespeicherten Code hat, der einen heruntergeladenen Anwendungscode aufweist, der, wenn er durch den ersten Prozessor ausgeführt wird, den ersten Prozessor zum Durchführen von Anwendungsbetrieben veranlasst, und
die zweite Schaltung (120) ein manipulationssicherer IC-Chip ist, der einen zweiten Prozessor und einen gespeicherten Code hat, der, wenn er durch den zweiten Prozessor ausgeführt wird, den zweiten Prozessor zum Durchführen der sicheren Betriebe veranlasst, und
der manipulationssichere IC-Chip dazu konfiguriert und eingerichtet ist, den Code in einem unverriegelten Zustand zu speichern und nach einem Speichern des Codes in einen verriegelten Zustand einzutreten, bei dem das Speichern eines zusätzlichen Codes auf dem manipulationssicheren IC-Chip verhindert wird.

13. Verfahren mit:
Initiieren von sicheren Betrieben in einer ersten Schaltung (110) durch:
Koppeln mit einem Benutzer; und
Bereitstellen von Betriebstriggerdaten, die verschlüsselt signiert und vor einer Änderung durch die erste Schaltung (110) gesichert sind, und zwar auf der Grundlage der Kopplung;
sicheres Durchführen von Anwendungen in einer zweiten Schaltung (120) einschließlich eines Sicherheitselements durch:
Speichern von Daten, die vor einem Zugriff durch die erste Schaltung (110) gesichert sind, und
Ausführen von sicheren Betrieben getrennt von Betrieben, die durch die erste Schaltung (110) ausgeführt werden, und zwar zumindest auf der Grundlage von einem Befehl, der durch die erste Schaltung (110) bereitgestellt wird; und
Validieren und Steuern von Zugriffen auf die zweite Schaltung (120) in einer Validationsschaltung (130), die mit der ersten Schaltung (110) und der zweiten Schaltung (120) verbunden ist, durch:
Speichern von Validationsbefehlen, die vor einem Zugriff durch die erste Schaltung (110) geschützt sind,
Verifizieren einer Charakteristik der Betriebstriggerdaten durch Ausführen der gespeicherten Validationsbefehle mit den Betriebstriggerdaten, und
Kommunizieren von Informationen zu der zweiten Schaltung (120) auf der Grundlage der Verifikation, wobei die zweite Schaltung (120) auf die kommunizierten Informationen reagiert, indem das Ausführen der sicheren Betriebe initiiert wird, wobei
der zumindest eine Befehl von der ersten Schaltung (110) direkt für die zweite Schaltung (120) bereitgestellt wird,
die Validationsbefehle als Reaktion auf die Betriebstriggerdaten in der Validationsschaltung (130) ausgeführt werden,
ein Autorisationsbefehl von der Validationsschaltung (130) zu der zweiten Schaltung (120) als Reaktion auf eine Verifikation einer Charakteristik der Betriebstriggerdaten kommuniziert wird, und
Ausführen des zumindest einen Befehls, wenn er direkt von der ersten Schaltung (110) aufgenommen wird, als Reaktion auf den Autorisationsbefehl in der zweiten Schaltung (120), wobei
durch die Validationsschaltung (130) der ersten Schaltung (110) mitgeteilt wird, dass die Charakteristik der Betriebstriggerdaten verifiziert ist, und
Senden des zumindest einen Befehls von der ersten Schaltung (110) zu der zweiten Schaltung (120) als Reaktion auf die Mitteilung, dass die Charakteristik der Betriebstriggerdaten verifiziert ist.

## Revendications

1. Appareil (100), comprenant:
un premier circuit (110) configuré et agencé pour amorcer des opérations sécurisées par :
interfaçage avec un utilisateur ; et
sur la base de l'interfaçage, fourniture de données de déclenchement d'opérations pourvues d'une signature cryptographique et protégées de toute altération par le premier circuit (110) ;
un deuxième circuit (120) comportant un élément sécurisé et configuré et agencé pour assurer un hébergement sécurisé d'applications par :
stockage de données sécurisées en accès par le premier circuit (110), et
exécution d'opérations sécurisées séparément d'opérations exécutées par le premier circuit (110) sur la base d'au moins une commande fournie par le premier circuit (110) ; et
un montage de circuits de validation (130) relié au premier circuit (110) et au deuxième circuit (120), le montage de circuits de validation (130) étant configuré et agencé pour valider et commander des accès au deuxième circuit (120) par :
stockage d'instructions de validation protégées en accès par le premier circuit (110),
vérification d'une caractéristique des données de déclenchement d'opérations par exécution des instructions de validation stockées avec les données de déclenchement d'opérations, et
sur la base de la vérification, communication d'informations au deuxième circuit (120), le deuxième circuit (120), en réponse aux informations communiquées, amorçant l'exécution des opérations sécurisées,
le premier circuit (110) étant configuré et agencé pour fournir l'au moins une commande directement au deuxième circuit (120),
le montage de circuits de validation (130) étant configuré et agencé pour exécuter les instructions de validation en réponse aux données de déclenchement d'opérations et, en réponse à la vérification d'une caractéristique des données de déclenchement d'opérations, communiquer une instruction d'autorisation au deuxième circuit (120), et
le deuxième circuit (120) étant configuré et agencé pour exécuter l'au moins une commande, reçue directement depuis le premier circuit (110), en réponse à l'instruction d'autorisation, le montage de circuits de validation (130) étant configuré et agencé pour notifier au premier circuit (110) que la caractéristique des données de déclenchement d'opérations est vérifiée, et
le premier circuit (110) étant configuré et agencé pour transmettre l'au moins une commande au deuxième circuit (120) en réponse à la notification que la caractéristique des données de déclenchement d'opérations est vérifiée.

2. Appareil (100) selon la revendication 1, dans lequel le deuxième circuit (120) est configuré et agencé pour exécuter l'au moins une commande en réponse à l'instruction d'autorisation par vérification que l'au moins une commande comporte une identification **caractérisée** dans l'instruction d'autorisation.

3. Appareil (100) selon la revendication 1 ou 2, dans lequel le montage de circuits de validation (130) est configuré et agencé pour vérifier la caractéristique des données de déclenchement d'opérations par obtention de données de sécurité entrées par l'utilisateur par le biais du premier circuit (110) et vérification que les données de sécurité entrées par l'utilisateur concordent avec des données stockées par le montage de circuits de validation (130).

4. Appareil (100) selon l'une quelconque des revendications 1 à 3, dans lequel le deuxième circuit (120) est configuré et agencé pour vérifier une signature accompagnant l'au moins une commande, et pour exécuter les instructions en réponse à la vérification de la signature.

5. Appareil (100) selon l'une quelconque des revendications précédentes, dans lequel :
le premier circuit (110) est configuré et agencé pour fournir l'au moins une commande au montage de circuits de validation (130),
le montage de circuits de validation (130) est configuré et agencé pour exécuter les instructions de validation en réponse aux données de déclenchement d'opérations et, en réponse à la vérification d'une caractéristique des données de déclenchement d'opérations, communiquer une requête d'accès au deuxième circuit (120), et
le deuxième circuit (120) est configuré et agencé pour exécuter les opérations sécurisées en réponse à la requête d'accès.

6. Appareil selon la revendication 5, dans lequel :
le montage de circuits de validation (130) est configuré et agencé pour exécuter l'au moins une commande fournie par le premier circuit (110), et pour communiquer la requête d'accès au deuxième circuit (120) en réponse à l'exécution de l'au moins une commande, et
le deuxième circuit (120) est configuré et agencé pour exécuter les opérations sécurisées en réponse à l'au moins une commande fournie par le premier circuit (110) par renvoi d'informations du deuxième circuit (120) au montage de circuits de validation (130) en réponse à la requête d'accès.

7. Appareil selon la revendication 5 ou 6, dans lequel :
le montage de circuits de validation (130) est configuré et agencé pour communiquer la requête d'accès par fourniture de l'au moins une commande au deuxième circuit (120), et
le deuxième circuit (120) est configuré et agencé pour exécuter les opérations en réponse à l'au moins une commande.

8. Appareil selon l'une quelconque des revendications 5 à 7, dans lequel :
le deuxième circuit (120) est configuré et agencé pour fournir un résultat, généré par exécution des opérations sécurisées, au montage de circuits de validation (130), et
le montage de circuits de validation (130) est configuré et agencé pour fournir le résultat reçu depuis le deuxième circuit au premier circuit (110).

9. Appareil selon l'une quelconque des revendications 5 à 8, dans lequel le montage de circuits de validation (130) est configuré et agencé pour vérifier une condition stipulée dans l'au moins une commande par obtention d'une entrée utilisateur et comparaison de l'entrée utilisateur à des données stockées par le montage de circuits de validation (130) et inaccessibles par des applications exécutées séparément du montage de circuits de validation (130).

10. Appareil selon l'une quelconque des revendications 5 à 9, dans lequel les données de déclenchement d'opérations comportent l'au moins une commande et bénéficient d'une protection cryptographique, et dans lequel le montage de circuits de validation (130) est configuré et agencé pour vérifier la caractéristique des données de déclenchement d'opérations par vérification qu'une signature de l'au moins une commande concorde avec une signature stockée par le montage de circuits de validation (130).

11. Appareil selon l'une quelconque des revendications précédentes, dans lequel le premier circuit (110) est configuré et agencé pour amorcer les opérations sécurisées en réponse à une entrée utilisateur.

12. Appareil selon l'une quelconque des revendications précédentes, dans lequel :
le premier circuit (110) consiste en une première puce dotée d'un premier processeur et d'un code stocké comportant un code d'application téléchargé dont l'exécution par le premier processeur amène le premier processeur à réaliser des opérations d'application, et
le deuxième circuit (120) consiste en une puce à circuit intégré inviolable dotée d'un deuxième processeur et d'un code stocké dont l'exécution par le deuxième processeur amène le deuxième processeur à réaliser les opérations sécurisées, et
la puce à circuit intégré inviolable est configurée et agencée pour stocker le code dans un état déverrouillé et, après avoir stocké le code, adopter un état verrouillé dans lequel le stockage d'un code additionnel sur la puce à circuit intégré inviolable est empêché.

13. Procédé, comprenant :
dans un premier circuit (110), l'amorçage d'opérations sécurisées par :
interfaçage avec un utilisateur ; et
sur la base de l'interfaçage, fourniture de données de déclenchement d'opérations pourvues d'une signature cryptographique et protégées de toute altération par le premier circuit (110) ;
dans un deuxième circuit (120) comportant un élément sécurisé, l'hébergement sécurisé d'applications par :
stockage de données sécurisées en accès par le premier circuit (110), et
exécution d'opérations sécurisées séparément d'opérations exécutées par le premier circuit (110) sur la base d'au moins une commande fournie par le premier circuit (110) ; et
dans un montage de circuits de validation (130) relié au premier circuit (110) et au deuxième circuit (120), la validation et la commande d'accès au deuxième circuit (120) par :
stockage d'instructions de validation protégées en accès par le premier circuit (110),
vérification d'une caractéristique des données de déclenchement d'opérations par exécution des instructions de validation stockées avec les données de déclenchement d'opérations, et
sur la base de la vérification, communication d'informations au deuxième circuit (120), le deuxième circuit (120), en réponse aux informations communiquées, amorçant l'exécution des opérations sécurisées,
la fourniture de l'au moins une commande du premier circuit (110) directement au deuxième circuit (120),
dans le montage de circuits de validation (130), l'exécution des instructions de validation en réponse aux données de déclenchement d'opération,
en réponse à la vérification d'une caractéristique des données de déclenchement d'opérations, la communication d'une instruction d'autorisation du montage de circuits de validation (130) au deuxième circuit (120), et
dans le deuxième circuit (120), l'exécution de l'au moins une commande, reçue directement depuis le premier circuit (110), en réponse à l'instruction d'autorisation,
la notification, par le montage de circuits de validation (130), au premier circuit (110) que la caractéristique des données de déclenchement d'opérations est vérifiée, et
la transmission de l'au moins une commande du premier circuit (110) au deuxième circuit (120) en réponse à la notification que la caractéristique des données de déclenchement d'opérations est vérifiée.
